# EUROPEAN PATENT APPLICATION

(11) **EP 1 832 788 A1**
(43) Date of publication of application: **12.09.2007**
(21) Application number: 07004616.4
(22) Date of filing: 06.03.2007
(51) Int. Cl.: F16J 15/10, C09K 3/10

(54) **Method for manufacturing sheet-like gasket**

(30) Priority: 09.03.2006 JP 2006063730
(71) Applicant: NICHIAS CORPORATION, Tokyo 105-8555 (JP)
(72) Inventor: Itoi, Katustoyo c/o Nichias Corporation, Hamamatsu-shi Shizuoka 431-2103 (JP); Saito, Hiroshi c/o Nichias Corporation, Hamamatsu-shi Shizuoka 431-2103 (JP)
(74) Representative: Fiesser, Gerold Michael

(57) **Abstract**

A non-asbestos sheet-like gasket usable at a high temperature, exhibiting only a small decrease in tensile strength and stress relaxation under high temperature conditions is provided. The method for manufacturing the sheet-like gasket comprises a step of obtaining a sheet-forming composition comprising a base fiber other than asbestos, a latex of hydrogenated acrylonitrile-butadiene, a filler, and rubber chemicals and a step of obtaining the sheet-like gasket by molding the composition and vulcanizing the rubber.

## Description

### Field of the Invention

The present invention relates to a non-asbestos sheet-like gasket (hereinafter referred to from time to time as "NA joint sheet") used in a wide variety of fields such as various industrial machines, vehicles, vessels, and household appliances.

### Description of Related Art

A joint sheet which is a common sheet-like gasket is produced by a process comprising adding a rubber dissolved in a solvent to a base fiber, a filler, and rubber chemicals, followed by sufficient mixing using a Henschel mixer or the like to obtain a raw material composition, supplying the raw material composition between a pair of calender rollers, one being a hot roller heated to about 150°C and the other being a cold roller maintained at about 20°C, laminating the composition on the hot roller side while vaporizing the solvent and vulcanizing the rubber on the hot roller until a sheet with a prescribed thickness is formed, and then removing the sheet from the hot roller.

Conventionally, an asbestos joint sheet in which asbestos is used as a base fiber of the joint sheet has been widely used. Taking advantage of the shape and superior heat resistance inherent to asbestos, the asbestos joint sheet is processed by punching into gaskets to be used in joints of pipes and machines in which water, oil, air, steam, and the like flow or are processed. The asbestos joint sheet contains 65 to 85% asbestos which is very flexible and highly fibrillated, even though it is an inorganic material. Since asbestos fibers are present in an asbestos joint sheet in a fully dispersed and entangled state, the asbestos joint sheet not only has a high tensile strength, but also is flexible and can exhibit elasticity due to entanglement of the asbestos fibers. Thus, the asbestos joint sheet can stably maintain the sealing properties over a long period of time without a decrease in the tightening stress□ However, since asbestos is a naturally-occurring mineral and there are concerns about exhaustion of resources, asbestos joint sheets are being replaced by asbestos-free joint sheets or non-asbestos joint sheets in which no asbestos is used at all or materials other than asbestos, that is, inorganic fibers or organic fibers or both, are used. However, since an NA joint sheet is inferior in properties such as tensile strength as compared with an asbestos joint sheet, a joint sheet used under severe conditions cannot be replaced by the NA joint sheet.

JP-A-2001-262126 discloses a joint sheet containing 40 wt% or more of filler with a particle size of 5-15 micrometers, which is obtained by charging a blend material comprising a base fiber material excluding asbestos, a rubber, a filler, and rubber chemicals between a hot roller and a cold roller and then laminating a sheet-like material on the hot roller side. This joint sheet has excellent tensile strength, a high compression rate, and good flexibility.

JP-A-2001-172611 discloses a joint sheet containing a polytetrafluoroethylene resin fiber, obtained by charging a blend material comprising a base fiber material excluding asbestos, a rubber, a filler, and rubber chemicals between a hot roller and a cold roller and then laminating a sheet-like material on the surface of the hot roller, and also discloses that a hydrogenated acrylonitrile-butadiene rubber can be used as the rubber. This joint sheet is free from the trouble of the kneading material adhering to the cold roller (loss phenomenon) during manufacturing and possesses flexibility, which allows an increase in the tightening force under high temperature conditions.

However, when organic fibers such as aromatic polyamide fibers, which are fibrillated like asbestos, are used as a base fiber of an NA joint sheet, the amount of organic fibers used is limited to the range of 5 to 15 wt%, because such organic fibers have a larger diameter as compared with asbestos and are inferior in heat resistance and vapor resistance. Inorganic fibers such as rock wool, carbon fiber, and glass fiber, if used as a base fiber, are easily broken during a blending operation or a board-making operation, since the inorganic fibers are more rigid and have a greater diameter as compared with asbestos fiber. If the amount of fibers used is increased, the raw materials adhere to the surface of the cold roller during laminating on the hot roller side using a calender roller (a loss phenomenon), resulting in an unduly impaired board-making operation. The amount of inorganic fibers is therefore limited to about 10 to 30 wt% in many cases. Therefore, an NA joint sheet contains a smaller amount of fibers and a larger amount of filler as compared with an asbestos joint sheet. If used under high temperature conditions or in a steamy atmosphere in which rubbers are easily deteriorated by heat or steam, an NA joint sheet with a small fiber content and a large filler content tends to become brittle, have reduced tensile strength, and have increased stress relaxation. A non-asbestos sheet-like gasket in which a hydrogenated or non-hydrogenated acrylonitrile-butadiene rubber is used exhibits superior ordinary-state properties and oil resistance only if the rubber is incorporated in an amount sufficient to maintain these excellent properties. If a large amount of hydrogenated or non-hydrogenated acrylonitrile-butadiene rubber deteriorates, the stress relaxation increases and the non-asbestos sheet-like gasket cannot maintain sufficient sealing properties for a long period of time. For this reason, a conventional non-asbestos sheet-like gasket cannot be used under the same high temperature conditions as the conditions in which the asbestos joint sheet is used.

The present invention has been achieved to solve the above problems in the prior art and has an object of providing an NA sheet-like gasket that can be used under high temperature conditions without a decrease in tensile strength and stress relaxation.

As a result of extensive studies, the present inventors have found that, in a method of manufacturing a sheet-like gasket by molding a composition for forming a sheet containing a base fiber other than asbestos, a rubber, a filler, and rubber chemicals, an NA sheet-like gasket using a latex of hydrogenated acrylonitrile-butadiene as the rubber exhibits stable sealing properties over a long period of time without a decrease in tensile strength and stress relaxation when used under high temperature conditions. The inventors have confirmed that such an effect cannot be obtained by using a latex of a rubber other than hydrogenated acrylonitrile-butadiene. These findings have led to the completion of the present invention.

Specifically, the present invention provides a method for manufacturing a sheet-like gasket by molding a composition for forming a sheet comprising a base fiber other than asbestos, a latex of hydrogenated acrylonitrile-butadiene, a filler, and rubber chemicals.

A sheet-like gasket produced according to a method of the present invention can be used under high temperature conditions without a decrease in tensile strength and stress relaxation. In addition, because the solid component in the latex is homogeneously dispersed in the raw material composition, the gasket produced according to the method of the present invention can exhibit the same excellent properties as the gasket in which a conventional hydrogenated or non-hydrogenated acrylonitrile-butadiene rubber is used, even if the amount of rubber is decreased.

According to a method of the present invention, the sheet-like gasket can be obtained by molding a composition for forming a sheet comprising a base fiber other than asbestos, a latex of hydrogenated acrylonitrile-butadiene (hereinafter referred to from time to time as "HNBR latex"), a filler, and rubber chemicals. The method for manufacturing such a sheet-like gasket comprises adding a solvent in a step of obtaining the above sheet-forming composition, feeding the sheet-forming composition between a hot roller and a cold roller to laminate the composition to a prescribed thickness on the hot roller side while vaporizing the solvent and vulcanizing the rubber, and removing the resulting sheet-like gasket (hereinafter referred to from time to time as "the first production method"). Another method comprises preparing a sheet-forming composition in the form of a slurry comprising an HNBR latex, a filler, and rubber chemicals, forming the composition into a sheet, and drying the sheet, followed by rolling (hereinafter referred to from time to time as "the second production method").

The first production method is a hot rolling method in which a sheet-forming composition comprising a base fiber other than asbestos, a latex of hydrogenated acrylonitrile-butadiene, a filler, rubber chemicals, and a solvent is fed between a hot roller and a cold roller to laminate the composition to a prescribed thickness on the hot roller side, while vaporizing the solvent and vulcanizing the rubber, followed by removing the resulting sheet-like gasket. In particular, the raw material composition is obtained by mixing a base fiber other than asbestos, an HNBR latex, a filler, rubber chemicals, and a solvent such as toluene using a Henschel mixer or a kneader for about 20 to 60 minutes. The resulting raw material composition is fed through a pair of calender rollers, one a hot roller heated to 120°C to 160°C, the other a cold roller maintained at 20°C to 50°C, and laminated on the hot roller side to a prescribed thickness while vaporizing the solvent and vulcanizing the rubber. Finally, the laminated sheet is removed from the hot roller to obtain a sheet-like product. There are no specific limitations to the method of adding the solvent when producing the raw material composition. In addition to the above-described method, a method of mixing the HNBR latex with the solvent and then mixing the resulting mixture with a base fiber, a filler, and rubber chemicals can be given, for example. In order to promote vulcanization, the sheet-like product removed from the hot roller may be subjected to a secondary vulcanization in an autoclave. Such a hot rolling method is also called a sheeter method, which is known in the art as disclosed in JP-A- 2001-181452, for example.

There are no specific limitations to the order of feeding the raw materials when preparing the slurry in the second production method. When the base fiber is an organic fiber, the organic fiber and water are preferably processed together by a refiner to obtain a first slurry in which the organic fiber is homogeneously dispersed. This method is preferable to homogeneously dispers a larger amount of organic fibers in a sheet-like gasket. Subsequently, an HNBR latex, a filler, rubber chemicals, and a coagulant are added to the first slurry to obtain a slurry-like mixture. The slurry is processed using a known sheet-making machine to obtain a sheet with a thickness of 3.0 mm, for example. When fibers other than organic fibers, for example, inorganic fibers, are used, a slurry in which an inorganic fiber is dispersed as the base fiber is prepared separately from the first slurry. The inorganic fiber-dispersed slurry can then be mixed with the first slurry. The inorganic fiber-dispersed slurry may contain a filler. Examples of the sheet-making machine include, but are not limited to, a circular net machine and a long circular net machine. The circular net machine is preferred due to a high yield being obtained.

The sheet prepared by a sheet-making process is dried and rolled. The sheet is rolled to a thickness of 1.5 mm, for example, if the sheet prepared by the sheet-making process has a thickness of 3.0 mm, for example. Although not specifically limited, a hot rolling method in which a raw sheet is caused to pass between two hot rollers, a method of rolling using a press machine and the like can be given as the rolling method. Of these methods, the hot rolling method is preferred due to high productivity being obtained. As a specific example of the hot rolling method, a method of causing a dry sheet prepared by a sheet-making process to pass between hot rolls heated to 100°C to 120°C and rolling the sheet at a prescribed load can be given. In order to promote vulcanization, the sheet-like product removed from the hot roller may be subjected to a secondary vulcanization in an autoclave. Either the first production method or the second production method can be used for producing the sheet-like gasket of the present invention. The first production method is preferred due to the capability of more homogeneously blending the rubber components in the HNBR latex with the base fiber and the filler.

The base fiber used in the method of the present invention includes, but is not specifically limited to, organic fibers such as aromatic polyamide fibers, plyamide fibers, polyolefin fibers, polyester fibers, polyacrylonitrile fibers, polyvinyl alcohol fibers, polyvinyl chloride fibers, polyurea fibers, polyurethane fibers, polyfluorocarbon fibers, phenol fibers, and cellulose fibers; and inorganic fibers such as carbon fibers, rock wool, glass fibers, sepiolite, ceramic fibers, molten quartz fibers, chemically treated high-silica-content fibers, molten aluminum silicate fibers, alumina continuous fibers, stabilized zirconia fibers, boron-nitride fibers, an alkali titanate fibers, whisker, a boron fibers, and a metal fibers. Of these, organic fibers are preferred. Among the organic fibers, an aromatic polyamide fiber not only excels in heat resistance and steam resistance, but also can be easily made into a sheet-like form during fibrillation. Thus, the resulting sheet also has excellent heat resistance and steam resistance. These base fibers may be used either individually or in combination of two or more.

The amount of the base fiber is 5 to 30 wt%, and preferably 7 to 20 wt%, of the total amount of the base fiber, the solid components of HNBR latex, the filler, and the rubber chemicals (hereinafter referred to from time to time as "raw material composition"). If the amount of the base fiber is too small, the tensile strength is inferior, and if greater than 30 wt%, the steam resistance is poor.

A latex synthesized by emulsion polymerization can be used as the HNBR latex in the present invention without any specific limitations. As the HNBR latex, a medium nitrile-butadiene rubber latex, a medium-high nitrile-butadiene rubber latex, and a high nitrile-butadiene rubber latex, which are classified according to the acrylonitrile content, can be used. In addition, HNBR latexes either modified or not modified with a carboxyl group or the like can be used. If a conventional acrylonitrile-butadiene rubber, a hydrogenated acrylonitrile-butadiene rubber, or a rubber latex other than the HNBR latex is used, the gasket cannot exhibit sufficient long-term sealing properties due to a significant decrease in the tensile strength and increase in the stress relaxation rate during use under high temperature conditions. The HNBR latex has properties such as a total solid component content of 38 to 45%, a pH of 8.0 to 10.5, a viscosity of 12 to 35 mPa·s, and an average particle diameter of 40 to 170 nm. The amount of HNBR, as solid components, in the raw material composition is 30 wt% or less, preferably 5 to 30 wt%, and particularly preferably 10 to 20 wt%. If the amount of HNBR is too small, sealing properties are inferior, and if greater than 30 wt%, stress relaxation increases. Stress relaxation refers to the phenomenon that stress decreases over time when a strain produced by tightening a sheet-like gasket is maintained. Therefore, a material with a small stress relaxation is suitable as a gasket.

The rubber material used in the production method of the present invention may consist only of the HNBR latex or may include other rubbers known in the art to the extent that the effect of the present invention is not impaired. As examples of such a rubber known in the art, an acrylonitrile-butadiene rubber, a hydrogenated acrylonitrile-butadiene rubber, an acrylic rubber, an ethylene-propylene rubber, a styrene-butadiene rubber, a chloroprene rubber, a butadiene rubber, a butyl rubber, a fluororubber, a silicone rubber, a chlorosulfonated polyethylene rubber, an ethylene-vinyl acetate rubber, a chlorinated polyethylene rubber, a chlorinated butyl rubber, an epichlorohydrin rubber, a nitrile-isoprene rubber, a natural rubber, and an isoprene rubber can be given.

There are no specific limitations to the filler used in the production method of the present invention inasmuch as the filler can be used for a sheet-like gasket. Examples that can be given include graphite, kaolin clay, talc, barium sulfate, sodium bicarbonate, mica, graphite, sericite, wollastonite, white carbon, sintered clay, aluminum hydroxide, magnesium hydroxide, and glass beads. Among these, graphite or a combination of graphite and a filler other than graphite is preferable. As the graphite, scale graphite, exfoliated graphite, and earthy graphite can be given. Among these, scale graphite and exfoliated graphite are preferable due to a large tensile strength owing to a large contact surface area among the particles, which strengthens the Van der Waals bonding force being obatined. The amount of the filler in the raw material composition is 30 to 90 wt%, and preferably 40 to 75 wt%.

If the amount of the filler is less than 30 wt%, the tensile strength is inferior, and if greater than 80%, the amount of the HNBR latex rubber and fibers which have a function of a binder is too small and the tensile strength is poor.

As the rubber chemicals used in the method of producing the sheet-like gasket of the present invention, rubber chemicals conventionally known as rubber chemicals for forming a joint sheet, for example, vulcanizing agents such as sulfur, zinc oxide, magnesium oxide, peroxide, and dinitrosobenzene; vulcanization accelerators such as a polyamine compound, an aldehydeamine compound, a thiuram compound, a dithiocarbamate compound, a sulfeneamide compound, a thiazole compound, a guanidine compound, a thiourea compound, and a xanthate compound; aging preventives; antiscorching agents; plasticizers; and coloring agents can be given.

As the solvent used in the first production method of the present invention, known solvents conventionally used in a hot rolling method such as toluene can be given. In the first production method, the rubber in the HNBR latex swells by mixing the composition containing the base fiber, the HNBR latex, the filler, and the rubber chemicals with the solvent, ensuring more homogeneous mixing of the base fiber and the filler. Moreover, it is possible to previously mix the HNBR latex with the solvent, followed by blending with the base fiber, the filler, and the rubber chemicals. This method ensures more homogeneous blending of the raw material composition. The ratio of the raw material composition to the solvent is appropriately determined in a range in which homogeneous blending of the base fiber, the filler, and the like can be ensured.

According to the production methods of the present invention, the rubber in the HNBR latex is more homogeneously dispersed and combined with the raw material components when mixed with a base fiber and a filler as compared with the case in which a solid rubber or a mixture of a solid rubber and a solvent is used. Therefore, the resulting sheet-like gasket exhibits better sealing properties and a higher tensile strength, and exhibits a smaller decrease in the tensile strength and stress relaxation under high temperature conditions as compared with a conventional sheet-like gasket in which an acrylonitrile-butadiene rubber or a hydrogenated acrylonitrile-butadiene rubber is used as the rubber. Therefore, the sheet-like gasket of the present invention exhibits excellent sealing performance under severe conditions such as high temperature conditions.

The NA sheet-like gasket obtained by the production methods of the present invention contains a base fiber, an HNBR rubber, a filler, and rubber chemicals. The amounts of the raw materials used are the same as those in the production methods. The NA sheet-like gasket of the present invention can be installed in flanges by coating or not coating a paste as a gasket substrate material used in a wide variety of fields such as petrochemical plants, various industrial machines, vehicles, vessels, and household appliances.

The present invention will be described in more detail by examples, which should not be construed as limiting the present invention.

### EXAMPLES

### Example 1

A raw material mixture was prepared by mixing a base fiber, a rubber, rubber chemicals, filler, and toluene with the properties shown in Table 1 in a Henschel mixer for 20 minutes at a low speed rotation. The resulting raw material mixture was fed between a hot roller heated to 150°C and a cold roller maintained at 20°C, rolled, and vulcanized, thereby laminating an NA sheet-like gasket with a thickness of 1.5 mm on the hot roller side. The amount of each raw material in the mixture is shown in Table 1 as the constitution in the finished NA sheet-like gasket, wherein the values are indicated on a weight percent basis and the amount of latex is on a solid component basis.

The HNBR latex was a commercially available latex of hydrogenated acrylonitrile-butadiene having a content of total solid components of 40%, a pH of 11, a viscosity of 20 mPa·s, and an average particle diameter of 100 nm. The NBR latex was a commercially available latex of acrylonitrile-butadiene having a content of total solid components of 45%, a pH of 10, a viscosity of 35 mPa·s, and an average particle diameter of 150 nm.

The tensile strength, stress relaxation rate, and sealing properties of the resulting NA sheet-like gasket were evaluated. The tensile strength and stress relaxation rate were measured according to the JIS R3453 joint sheet test standard, in which the tensile strength was measured at an ordinary state and after heat deterioration. The stress relaxation rate was determined as the rate of reduction due to heat deterioration. In measuring the tensile strength after heat deterioration, the sample was exposed to hot air in a hot air circulating kiln at 300°C for 70 hours. In measuring the stress relaxation after heat deterioration, the sample was exposed to hot air in a hot air circulating kiln at 200°C for 22 hours. For measuring the sealing properties, a sheet punched to a size conforming to a JIS10K25A flange was applied to the flange and clamped at a surface pressure of 35 MPa. Then, a nitrogen gas load at an inner pressure of 9.8 MPa was applied for 10 minutes to measure leakage by a water replacement method. The results are shown in Table 2.

### Examples 2 to 3

NA sheet-like gaskets with a thickness of 1.5 mm were prepared in the same manner as in Example 1 using the raw materials shown in the columns of Examples 2 and 3 in Table 1 to evaluate the same items as in Example 1. The results are shown in Table 2.

### Comparative Examples 1 to 3

NA sheet-like gaskets with a thickness of 1.5 mm were prepared in the same manner as in Example 1 using the raw materials shown in the columns of Comparative Examples 1 to 3 in Table 1 to evaluate the same items as in Example 1. The results are shown in Table 2.

**TABLE 1**

| Raw materials | | Example | | | Comparative Example | | |
|---|---|---|---|---|---|---|---|
| | | 1 | 2 | 3 | 1 | 2 | 3 |
| Base fiber | Aromatic polyamide fiber | 15 | 15 | 15 | 15 | 15 | 15 |
| Rubber | HNBR latex | 30 | 15 | 15 | - | - | - |
| | NBR latex | - | - | - | 15 | - | - |
| | HNBR rubber (solid) | - | - | - | - | 15 | 35 |
| Rubber chemical | | 8 | 4 | 4 | 4 | 4 | 9 |
| Filler | Graphite | 47 | 66 | 40 | 66 | 40 | 25 |
| | Kaolin clay | - | - | 26 | - | 26 | 16 |
| Total | | 100 | 100 | 100 | 100 | 100 | 100 |

**TABLE 2**

| Properties | Example | | | Comparative Example | | |
|---|---|---|---|---|---|---|
| | 1 | 2 | 3 | 1 | 2 | 3 |
| Tensile strength (MPa) | 25 | 23 | 20 | 20 | 18 | 26 |
| Tensile strength reduction (%)(300°C × 70 Hr) | 8 | 9 | 20 | 50 | 11 | 12 |
| Stress relaxation rate (200°C × 22 Hr) | 500 | 40 | 43 | 50 | 45 | 70 |
| Sealing properties (cm³/min) | 0.00 | 0.03 | 0.05 | 0.03 | 0.20 | 0.00 |

As is clear from the results shown in Tables 1 and 2, the NA sheet-like gaskets of Examples 1 to 3 have excellent tensile strength, stress relaxation, sealing properties, and an excellent tensile strength reduction rate. Comparison of Example 2 (HNBR latex) with Comparative Example 1 (butadiene-acrylonitrile rubber latex) indicates that the product of Example 2 exhibited a smaller reduction of the tensile strength under high temperature conditions than the product of Comparative Example 1, confirming superior heat resistance of the product of Example 2. Comparison of Example 3 (HNBR latex) with Comparative Example 2 (HNBR) indicates that the product of Example 3 has better sealing properties than the product of Comparative Example 2. In addition, comparison of Comparative Example 2 with Comparative Example 3 indicates that although the sealing properties are improved by increasing the amount of solid HNBR rubber, the stress relaxation under high temperature conditions remarkably decreases.

## Claims

1. A method for manufacturing a sheet-like gasket comprising preparing a sheet-forming composition which comprises a base fiber other than asbestos, a latex of hydrogenated acrylonitrile-butadiene, a filler, and rubber chemicals and molding the sheet-forming composition into a sheet.

2. The method according to claim 1, wherein, in the step of obtaining the above sheet-forming composition, a solvent is further added and mixed and the sheet-forming composition is fed between a hot roller and a cold roller to laminate the composition to a prescribed thickness on the hot roller side while vaporizing the solvent and vulcanizing the rubber, and removing the resulting sheet-like gasket.

3. The method according to claim 1, comprising preparing a slurry composition for forming a sheet comprising the base fiber other than asbestos, the latex of hydrogenated acrylonitrile-butadiene, the filler, and the rubber chemicals, drying the composition, and rolling the dry composition.

4. The method according to any one of claims 1 to 3, wherein the content of the latex of hydrogenated acrylonitrile-butadiene on solid basis is 5 to 30 wt% of the total amount of the base fiber other than asbestos, the filler, and the rubber chemicals.

5. The method according to any one of claims 1 to 4, wherein the filler is graphite or a mixture of graphite and a filler other than graphite.
